# EUROPEAN PATENT SPECIFICATION

(11) **EP 3 886 053 B1**
(45) Date of publication and mention of the grant of the patent: **11.09.2024**
(21) Application number: 19915759.5
(22) Date of filing: 28.06.2019
(51) Int. Cl.: G06T 17/05, G06T 7/579, G06T 7/73

(54) **SLAM MAPPING METHOD AND SYSTEM FOR VEHICLE**
SLAM-MAPPING-VERFAHREN UND -SYSTEM FÜR EIN FAHRZEUG
PROCÉDÉ ET SYSTÈME DE CARTOGRAPHIE SLAM POUR VÉHICULE

(30) Priority: 22.02.2019 CN 201910136692
(43) Date of publication of application: 29.09.2021
(73) Proprietor: Guangzhou Xiaopeng Motors Technology Co., Ltd., Guangzhou (CN)
(72) Inventor: ZHOU, Jian, Guangzhou, Guangdong 510000 (CN); LI, Liang, Guangzhou, Guangdong 510000 (CN); WANG, Leigang, Guangzhou, Guangdong 510000 (CN); LIU, Zhongyuan, Guangzhou, Guangdong 510000 (CN); XIAO, Zhiguang, Guangzhou, Guangdong 510000 (CN)
(74) Representative: Isarpatent
(86) International application number: PCT/CN2019/093537
(87) International publication number: WO 2020/168668

(56) References cited:
- WO-A1-2017/080451
- CN-A- 107 167 826
- CN-A- 107 990 899
- CN-A- 107 990 899
- CN-A- 108 307 179
- CN-A- 108 401 461
- CN-A- 109 887 087
- US-A1- 2013 342 641
- ENGEL JAKOB ET AL: "Large-scale direct SLAM with stereo cameras", 2015 IEEE/RSJ INTERNATIONAL CONFERENCE ON INTELLIGENT ROBOTS AND SYSTEMS (IROS), IEEE, 28 September 2015 (2015-09-28), pages 1935 - 1942, XP032831852, DOI: 10.1109/IROS.2015.7353631
- MAIR E ET AL: "Efficient camera-based pose estimation for real-time applications", INTELLIGENT ROBOTS AND SYSTEMS, 2009. IROS 2009. IEEE/RSJ INTERNATIONAL CONFERENCE ON, IEEE, PISCATAWAY, NJ, USA, 10 October 2009 (2009-10-10), pages 2696 - 2703, XP031580942, ISBN: 978-1-4244-3803-7

## Description

### TECHNICAL FIELD

The present disclosure relates to the technical field of automatic drive, in particular to a SLAM method and system for a vehicle.

### BACKGROUND

In the field of automatic drive, monocular-vision simultaneous localization and mapping (SLAM) is adopted by autonomous vehicles to create a map consistent with the true environment by means of a single visual sensor (such as a camera lens), and the position of the vehicles in the map can be determined.

However, traditional monocular-vision SLAM carries out initialization successfully through a dynamic method by means of images captured by the camera lens in the moving process. Therefore, during the mapping process, mapping has to be started complete the initialization of monocular-vision SLAM after the vehicle pulls out by a certain distance, which may lead to a low success rate of mapping and the lack of part of environmental information in the created map.

"Large-Scale Direct SLAM with Stereo Camaras" by Engel et al. propose a novel Large-Scale Direct SLAM algorithm for stereo cameras (Stereo LSD-SLAM) that runs in real-time at high frame rate on standard CPUs. In contrast to sparse interest-point based methods, this approach aligns images directly based on the photo consistency of all high-contrast pixels, including corners, edges and high texture areas. It concurrently estimates the depth at these pixels from two types of stereo cues: Static stereo through the fixed-baseline stereo camera setup as well as temporal multi-view stereo exploiting the camera motion. By incorporating both disparity sources, the algorithm can even estimate depth of pixels that are under-constrained when only using fixed-baseline stereo. Using a fixed baseline, on the other hand, avoids scale-drift that typically occurs in pure monocular SLAM. Further, a robust approach is proposed to enforce illumination invariance, capable of handling aggressive brightness changes between frames - greatly improving the performance in realistic settings. In experiments, state-of-the-art results are demonstrated on stereo SLAM benchmarks such as Kitti or challenging datasets from the EuRoC Challenge 3 for micro aerial vehicles.

### SUMMARY

The embodiments of the present disclosure disclose a SLAM method for a vehicle, which can complete initialization when the vehicle is in a static state, thus increasing the success rate of mapping.

The invention provides a SLAM method for a vehicle, a SLAM system for a vehicle and a vehicle as recited in the independent claims.

Advantageous embodiments are set out in the dependent claims.

In a first aspect, the embodiments of the present disclosure disclose a SLAM method for a vehicle. The method comprises:
acquiring two initial frames respectively captured by any two camera modules of a vehicle when the vehicle is in a static state, wherein view-finding scopes of the two camera modules are at least partially overlapped;
determining, according to pre-calibrated internal parameters and external parameters of the two camera modules and a parallax of matching feature points in the two initial frames, three-dimensional spatial positions of the matching feature points to obtain map points corresponding to the matching feature points to create an initial SLAM map to complete initialization;
acquiring, when the initialization succeeds, an image captured by any one target camera module of the two camera modules; and
carrying out, based on the initial SLAM map, monocular-vision SLAM according to the image captured by the target camera module.

The step of performing, based on the initial SLAM map, monocular-vision SLAM according to the image captured by the target camera module in the first aspect of the embodiments of the present disclosure comprises:
matching feature points in the image captured by the target camera module and map points in a current SLAM map, wherein when the image is a first frame of image captured by the target camera module, the current SLAM map is the initial SLAM map;
determining a camera module pose corresponding to each frame of image captured by the target camera module according to feature points and map points matching the feature points to obtain a first camera module pose sequence of the target camera module;
tracking positions, in the images captured by the target camera module, of feature points without matching map points, and determining three-dimensional spatial positions of the feature points without matching map points according to camera module poses corresponding to the images where the feature points without matching map points are located, to create new map points which are then added to the current SLAM map;
acquiring, by a positioning module of the vehicle, a first vehicle pose sequence of the vehicle corresponding to the first camera module pose sequence;
iteratively adjusting the values of camera module poses in the pose sequence of the target camera module and the values of three-dimensional spatial positions of map points in the current SLAM map until a projection error between the first camera module pose sequence and the first vehicle pose sequence is minimal; and
creating a global SLAM map based on the values of the camera module poses in the pose sequence of the target camera module and the values of the three-dimensional spatial positions of the map points in the current SLAM map under the minimum projection error.

As an optional implementation, the method in the first aspect of the embodiments of the present disclosure further comprises:
acquiring multiple frames of target images captured by the target camera module and the global SLAM map during re-localization;
matching feature points in each of the multiple frames of target images and map points in the global SLAM map;
determining a camera module pose, in the global SLAM map, of the target camera module corresponding to each frame of target image according to feature points and map points matching feature points to obtain a second camera module pose sequence of the target camera module;
acquiring, by the positioning module of the vehicle, a second vehicle pose sequence of the vehicle corresponding to the second camera module pose sequence;
determining a re-localization pose, in the global SLAM map, of the target camera module based on the multiple frames of target images and the second camera module pose sequence, so that when the second vehicle pose sequence is transformed to a SLAM map coordinate system of the global SLAM map by means of the re-localization pose of the target camera module, an error between a third vehicle pose sequence obtained after transformation and the second camera module pose sequence is minimal, wherein the origin of the global SLAM map coordinate system is the position of an optical center when the target camera module captures the initial frame; and
determining a re-localization pose, in the global SLAM map, of the vehicle according to the re-localization pose of the target camera module in the global SLAM map.

As an optional implementation, after the step of determining a re-localization pose, in the global SLAM map, of the vehicle according to the re-localization pose of the target camera module in the global SLAM map in the first aspect of the embodiments of the present disclosure, the method further comprises:
acquiring a current pose of the vehicle measured by the positioning module of the vehicle at the current moment; and
determining a localization pose, corresponding to the current pose, in the global SLAM map as a localization result of the vehicle at the current moment according to the current pose and the re-localization pose of the vehicle in the global SLAM map.

In a second aspect, the embodiments of the present disclosure disclose a SLAM system for a vehicle. The system comprises:
an initialization unit configured for acquiring two initial frames respectively captured by any two camera modules of a vehicle when the vehicle is in a static state, and determining, according to pre-calibrated internal parameters and external parameters of the two camera modules and a parallax of matching feature points in the two initial frames, three-dimensional spatial positions of the matching feature points to obtain map points corresponding to the matching feature points to create an initial SLAM map to complete initialization, wherein view-finding scopes of the two camera modules are at least partially overlapped;
a mapping unit configured for acquiring, when the initialization succeeds, an image captured by any one target camera module of the two camera modules, and performing, based on the initial SLAM map, monocular-vision SLAM according to the image captured by the target camera module.

The mapping unit comprises:
a matching sub-unit configured for matching feature points in the image captured by the target camera module and map points in a current SLAM map, wherein when the image is a first frame of image captured by the target camera module, the current SLAM map is the initial SLAM map;
a localization sub-unit configured for determining a camera module pose corresponding to each frame of image captured by the target camera module according to feature points and map points matching the feature points to obtain a first camera module pose sequence of the target camera module;
a mapping sub-unit configured for tracking positions, in the images captured by the target camera module, of feature points without matching map points, and determining three-dimensional spatial positions of the feature points without matching map points according to camera module poses corresponding to the images where the feature points without matching map points are located, to create new map points which are then added to the current SLAM map;
an acquisition sub-unit configured for acquiring, by a positioning module of the vehicle, a first vehicle pose sequence of the vehicle corresponding to the first camera module pose sequence; and
an optimization sub-unit configured for iteratively adjusting the values of camera module poses in the pose sequence of the target camera module and the values of three-dimensional spatial positions of map points in the current SLAM map until a projection error between the first camera module pose sequence and the first vehicle pose sequence is minimal;

Wherein, the mapping sub-unit is also configured for creating a global SLAM map based on the values of the camera module poses in the pose sequence of the target camera module and the values of the three-dimensional spatial positions of the map points in the current SLAM map under the minimum projection error.

As an optional implementation, in the second aspect of the embodiments of the present disclosure, the system further comprises:
a first acquisition unit configured for acquiring multiple frames of target images captured by the target camera module and the global SLAM map during re-localization;
a matching unit configured for matching feature points in each of the multiple frames of target images and map points in the global SLAM map, and determining a camera module pose, in the global SLAM map, of the target camera module corresponding to each frame of target image according to feature points and map points matching feature points to obtain a second camera module pose sequence of the target camera module;
a second acquisition unit configured for acquiring, by the positioning module of the vehicle, a second vehicle pose sequence of the vehicle corresponding to the second camera module pose sequence; and
a re-positioning unit configured for determining a re-localization pose, in the global SLAM map, of the target camera module based on the multiple frames of target images and the second camera module pose sequence, so that when the second vehicle pose sequence is transformed to a SLAM map coordinate system of the global SLAM map by means of the re-localization pose of the target camera module, an error between a third vehicle pose sequence obtained after transformation and the second camera module pose sequence is minimal; and determining a re-localization pose, in the global SLAM map, of the vehicle according to the re-localization pose of the target camera module in the global SLAM map;
Wherein, the origin of the global SLAM map coordinate system is the position of an optical center when the target camera module captures the initial frame.

As an optional implementation, in the second aspect of the embodiments of the present disclosure, the system further comprises:
a third acquisition unit configured for acquiring a current pose of the vehicle measured by the positioning module of the vehicle at the current moment after the re-positioning unit determines the re-localization pose of the vehicle in the global SLAM map according to the re-localization pose of the target camera module in the global SLAM map; and
a positioning unit configured for determining a localization pose, corresponding to the current pose, in the global SLAM map as a localization result of the vehicle at the current moment according to the current pose and the re-localization pose of the vehicle in the global SLAM map.

In a third aspect, the embodiments of the present disclosure disclose a vehicle comprising the SLAM system for a vehicle disclosed in the second aspect of the embodiments of the present disclosure.

In a fourth aspect, the embodiments of the present disclosure disclose a SLAM system for a vehicle, comprising:
a memory having an executable program code stored therein;
a processor coupled to the memory; and
a camera module and a vehicle positioning module;
wherein, images captured by the camera module and vehicle poses detected by the vehicle positioning module are transmitted to the processor, and the processor calls the executable program code stored in the memory to implement the method disclosed in the first aspect of the embodiments of the present disclosure.

In a fifth aspect, the present disclosure discloses a computer-readable storage medium having a computer program stored therein, wherein the computer program enables a computer to implement the method disclosed in the first aspect of the embodiments of the present disclosure.

In a sixth aspect, the embodiments of the present disclosure disclose a computer program product which, when run on a computer, enables the computer to implement the method disclosed in the first aspect of the embodiments of the present disclosure.

Compared with the prior art, the embodiments of the present disclosure have the following beneficial effects:
according to the embodiments of the present disclosure, two initial frames are respectively captured by any two camera modules of a vehicle when the vehicle is in a static state; an initial SLAM map is created by means of matching feature points in the initial frames to carry out initialization by means of binocular camera modules; when the initialization succeeds, any one target camera module of the two camera modules is used to capture an image to carry out monocular-vision SLAM, so that the advantages of binocular vision and monocular vision are integrated; and the initialization is completed when the vehicle is in the static state, and the vehicle does not need to be moved by a certain distance, so that the success rate of mapping is increased, and information losses in the map are reduced.

### BRIEF DESCRIPTION OF THE DRAWINGS

To more clearly explain the technical solutions of the embodiments of the present disclosure, the drawings configured for describing the embodiments of the present disclosure will be briefly introduced below. Clearly, the drawings in the following description merely illustrate some embodiments of the present disclosure, and those ordinarily skilled in the art can obtain other drawings according to the following ones without creative labor.
FIG. 1 is a flow chart of a SLAM method for a vehicle according to one embodiment of the present disclosure;
FIG. 2 is a flow chart of a SLAM method for a vehicle according to another embodiment of the present disclosure;
FIG. 3 is a flow chart of a SLAM method for a vehicle according to still another embodiment of the present disclosure;
FIG. 4 is a structural diagram of a SLAM system for a vehicle according to one embodiment of the present disclosure;
FIG. 5 is a structural diagram of a SLAM system for a vehicle according to another embodiment of the present disclosure;
FIG. 6 is a structural diagram of a SLAM system for a vehicle according to still another embodiment of the present disclosure;
FIG. 7 is a structural diagram of a SLAM system for a vehicle according to still still another embodiment of the present disclosure.

### DETAILED DESCRIPTION

The technical solutions of the embodiments of the present disclosure will be clearly and completely described below in conjunction with the accompanying drawings of the embodiments. Obviously, the embodiments in the following description are merely illustrative ones, and are not all possible ones of the present disclosure. All other embodiments obtained by those ordinarily skilled in the art according to the following ones without creative labor should also fall within the protection scope of the present disclosure.

It should be noted that terms such as "comprise" and "provided with" and any transformations thereof in the embodiments and accompanying drawings of the present disclosure are intended to express non-exclusive inclusion. For example, a process, method, system, product or device including a series of steps or units will not be limited to the steps or units listed, and may also comprise steps or units that are not listed, or other intrinsic steps or units of the process, method, product or device.

The embodiments of the present disclosure disclose a SLAM method and system for a vehicle, which can complete initialization when the vehicle is in a static state, thus increasing the success rate of mapping. The SLAM method and system will be described in detail below.

### Embodiment 1

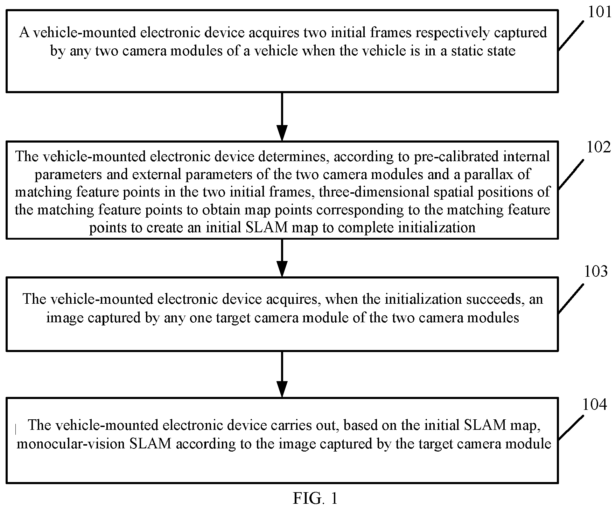

Please refer to FIG. 1 which is flow chart of a SLAM method for a vehicle according to one embodiment of the present disclosure. Wherein, the SLAM method for a vehicle in FIG. 1 is suitable for a vehicle-mounted electronic device such as a vehicle-mounted computer or an electronic control unit (ECU), and the embodiments of the present disclosure have no limitation in this aspect. As shown in FIG. 1, the SLAM method for a vehicle may comprise the following steps:
101: the vehicle-mounted electronic device acquires two initial frames respectively captured by any two camera modules of a vehicle when the vehicle is in a static state.

In this embodiment of the present disclosure, view-finding scopes of the two camera modules are at least partially overlapped. As an optional implementation, the two camera modules may be any two camera modules of a multi-view camera system. The multi-view camera system may comprise three or more camera modules, wherein the distance between every two adjacent camera modules may be set to 10cm-20cm, and all the camera modules face the travel direction of the vehicle.

As another optional implementation, considering that the relative distance between the adjacent camera modules in the multi-view camera system is not too far, two camera modules, having the farthest relative distance therebetween, in the multi-view camera system (such as the camera modules located at two ends) may be used to capture images to ensure that a parallax of feature points in the two initial frames is large enough, and two images respectively captured by the two cameras having the farthest relative distance therebetween are used as the two initial frames.

It can be understood that the precondition of successful initialization is the existence of matching feature points in the initial frames, wherein the matching feature points are projection points obtained by projecting the same object in a three-dimensional space into the two initial frames after the object is photographed by the two camera modules, so the view-finding scopes of the two camera modules should be at least partially overlapped to ensure that matching feature points exist in the initial frames. Preferably, the two camera modules may be controlled to capture images synchronously to further ensure that matching feature points exist in the initial frames. In addition, the initial frames should meet certain requirements. For example, the number of feature points in the initial frames should be greater than a preset threshold (such as 100). That is to say, if the number of feature points in the images, corresponding to the overlapped parts of the view-finding scopes of the camera modules, captured by the two camera modules is greater than the preset threshold, the images captured by the two camera modules will be set as the initial frames; otherwise, the two camera modules will re-capture images.

102: the vehicle-mounted electronic device determines, according to pre-calibrated internal parameters and external parameters of the two camera modules and the parallax of the matching feature points in the two initial frames, three-dimensional spatial positions of the matching feature points to obtain map points corresponding to the matching feature points to create an initial SLAM map to complete initialization.

In this embodiment of the present disclosure, based on the principle of stereoscopic vision, the three-dimensional spatial positions of the matching feature points can be determined according to the parallax of the matching feature points in the two initial frames under the condition that the internal parameters (such as the focal length and the distortion factor) of the two camera modules and relative external parameters (such as the baseline, and the horizontal displacement and rotation of the right camera module with respect to the left camera module) are known.

It can be understood that the internal parameters of the camera modules can represent a mapping relationship between three-dimensional spatial points and image pixels, so the relative positions of the feature points with respect to the camera modules can be recovered based on the internal parameters of the camera modules and the positions of the feature points in the images, but depth information are not available. Furthermore, the depth information d of the feature points can be obtained according to the following simplified mathematic model: d=b*f/p, wherein b is the baseline (the distance between the optical centers of the two camera modules), f is the focal length, and n is the parallax of the matching feature points in the two frames of images.

Assume the position of the initial frame captured by any one of the two camera modules is taken as the origin of a coordinate system, three-dimensional spatial positions, with respect to the origin of the coordinate system, of feature points repeatedly appearing in the two initial frames can be determined to obtain corresponding map points which constitute the initial SLAM map, and the initialization of the SLAM system is completed.

103: when the initialization succeeds, the vehicle-mounted electronic device acquires an image captured by any one target camera module of the two camera modules.

In this embodiment of the present disclosure, to facilitate calculation, the target camera module may be the camera module, the position of which is selected as the origin of the coordinate system. As an optional implementation, the vehicle starts to travel when the initialization succeeds, and the target camera module continuously captures multiple frames of images in the continuous traveling process of the vehicle.

104: the vehicle-mounted electronic device carries out, based on the initial SLAM map, monocular-vision SLAM according to the image captured by the target camera module.

In this embodiment of the present disclosure, when the initialization succeeds, monocular-vision SLAM is adopted, that is, only one target camera module is used to capture images. It can be understood that monocular-vision SLAM may specifically comprise the following steps:
When the target camera module captures a first frame of image, feature points in the first frame of image and map points in the initial SLAM map are matched (namely, 2D-3D matching);
For feature points and map points matching the feature points, a camera (camera module) pose corresponding to the first frame of image can be determined according to image positions of the feature points in the first frame of image and three-dimensional spatial positions of the corresponding map points matching the feature points;

For each frame of image captured after the first frame of image by the target camera module, the above step is repeated to determine a camera pose corresponding each frame of image; meanwhile, for feature points without matching map points in the images, these feature points are tracked in the images captured by the target camera module, and three-dimensional spatial positions of these feature points are worked out according to image positions of these feature points in the images and camera poses corresponding to the images where these feature points are located to obtain new map points which are then added into the SLAM map.

To sum up, a map of an environment where the vehicle is located can be created by continuously adding map points.

According to the method described in FIG. 1, a binocular camera system constituted by two camera modules is used during initialization; compared with a monocular camera system constituted by one camera module, the binocular camera system can acquire initial frames having a parallax therebetween when the vehicle is in a static state, so the vehicle does not need to be pulled out by a certain distance, and the initialization can be completed when the vehicle is in the static state, which reduces data losses during mapping; when the initialization is completed, images captured by only one camera module are configured for mapping, which, compared with a mapping solution based on the binocular camera system, can reduce the amount of image data to be processed. That is to say, the method in described FIG. 1 integrates the advantages of monocular vision and the advantages of binocular vision, thus increasing the success rate of mapping and reducing the amount of data to be processed.

In addition, Steps 101-102 may be performed when mapping is started or performed when a mapping failure is detected in the mapping process. That is to say, when a mapping failure is detected, any two camera modules, that preferably include a target camera module of the vehicle, are started to capture images which are then used as the initial frames obtained when the vehicle is in the static state. Wherein, the mapping failure may refer to a case where the number of feature points in the image captured by the target camera module is too small or a case where the number of feature points, matching map points, in the image is too small, and the embodiments of the present disclosure have no limitation in this aspect. Therefore, by performing Steps 101-102, initialization can be rapidly performed again in case of the mapping failure to conduct mapping again, and compared with the monocular camera system that performed initialization by moving the vehicle, data losses between the two times of mapping can be reduced.

### Embodiment 2

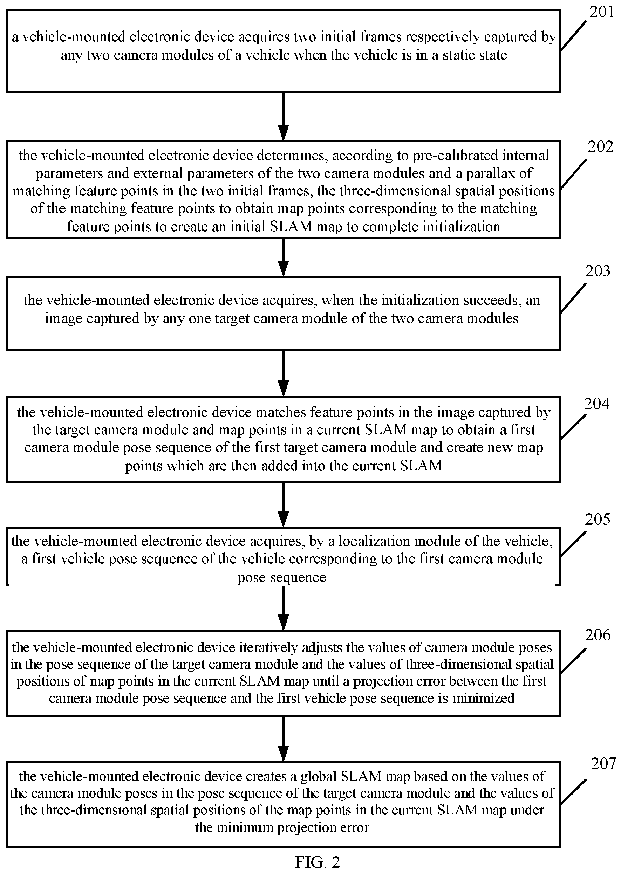

Please refer to FIG. 2 which is a flow chart of a SLAM method for a vehicle according to another embodiment of the present disclosure. As shown in FIG. 2, the SLAM method for a vehicle may comprise the following steps:
201: the vehicle-mounted electronic device acquires two initial frames respectively captured by any two camera modules of a vehicle when the vehicle is in a static state.

In this embodiment of the present disclosure, the two camera modules may be any two camera modules in a multi-view camera system and may have identical or different focal lengths and field angles. However, considering that the multi-view camera system includes many camera modules, camera modules with a fixed focal length are generally adopted to reduce the amount of image data to be processed and shorten the processing time. Furthermore, to expand the view distance, different focal lengths are generally set for different camera modules to solve the problem that the focal length of each camera module cannot be changed. Moreover, the field angles of different camera modules may be different. For example, the field angles of three camera modules are 120°, 60° and 30° respectively, so that scenes within different angle ranges can be covered by different camera modules.

When the focal lengths and the field angles are identical, image effects of the two camera modules are identical, and the accuracy of feature point matching performed on the initial frames in Step 202 is relatively high. When the focal lengths and the field angles are different, the deformation degrees of an object in the images captured by the two camera modules are different, which will reduce the accuracy of feature point matching. So, when the three-dimensional spatial positions of the feature points are recovered based on binocular stereoscopic vision, the accuracy of the three-dimensional spatial positions recovered by means of initial frames captured by two camera modules with the same focal length will be higher than that of the three-dimensional spatial positions recovered by means of initial frames captured by two camera modules with different focal lengths. In this embodiment of the present disclosure, camera modules with different focal lengths are adopted, and the following steps are performed to reduce the influence of the camera modules with different focal lengths on the calculation accuracy of three-dimensional spatial positions:
A first image and a second image that are respectively captured by any two camera modules of the vehicle when the vehicle is in the static state are acquired; and
The first image and the second image are processed according to an image effect obtained under the same focal length, and the processed first image and the processed second image are used as the two initial frames.

Wherein, assume the focal length of one camera module of the two camera modules is f_{A} and the focal length of the other camera module is fc, the same focal length f_{AC} meets the condition: f_{AC}∈[f_{A}, fc]. It can be understood that when parameters of the camera modules are calibrated, internal parameters of one camera modules can be separately calibrated to obtain f_{A} and then internal parameters of the other camera module are separately calibrated to obtain f_{C}, which means that the two camera modules are not synchronously calibrated.

By performing the above steps, images captured by the two camera modules with different focal length can be adjusted by soft focusing to have the same effect as images captured by camera modules with the same focal length to reduce the influence of the camera modules with different focus lengths on the calculation accuracy of the three-dimensional spatial positions, thus reducing the influence on the mapping accuracy.

In addition, Steps 202-203 are identical with Steps 102-103, and will no longer be detailed below.

204: the vehicle-mounted electronic device matches the feature points in the image captured by the target camera module and map points in a current SLAM map to obtain a first camera module pose sequence of the target camera module and create new map points which are then added to the current SLAM map.

In this embodiment of the present disclosure, the current SLAM map is a SLAM map that has been established at the current moment; and when the image configured for feature point matching is a first frame of image captured by the target camera module, the current SLAM map is the initial SLAM map.
Specifically, a camera module pose corresponding to each frame of image captured by the target camera module can be determined according to the feature points and the map points matching the feature points to obtain the first camera module pose sequence of the target camera module, wherein poses in the first camera module pose sequence may be in one-to-one correspondence with the images captured by the target camera module;

For feature points without matching map points, positions, in the images captured by the target camera module, of the feature points without matching map points are tracked, and three-dimensional spatial positions of the feature points without matching mapping points are determined according to camera module poses corresponding to the images where the feature points without matching map points are located to create new map points which are then added to the current SLAM map.

205: the vehicle-mounted electronic device acquires a first vehicle pose sequence of the vehicle corresponding to the first camera module pose sequence by a positioning module of the vehicle.

In this embodiment of the present disclosure, an inertial measurement unit (IMU), a wheel pulse counter or other sensors may be disposed on the vehicle, and these sensors are used as the positioning module of the vehicle (such as a speedometer) to calculate the speed of the vehicle and locate the position of the vehicle. The first vehicle pose sequence may comprise multiple vehicle poses measured by the positioning module of the vehicle, and each vehicle pose corresponds to one camera module pose in the first camera module pose sequence. It can be understood that assume the target camera module captures an image at a certain moment, feature points in the image and map points are matched to determine a camera module pose corresponding to the image; meanwhile, a vehicle pose measured by the positioning module of the vehicle at this moment corresponds to the camera module pose.

206: the vehicle-mounted electronic device iteratively adjusts the values of camera module poses in the pose sequence of the target camera module and the values of three-dimensional spatial positions of map points in the current SLAM map until a projection error between the first camera module pose sequence and the first vehicle pose sequence is minimal.

In this embodiment of the present disclosure, during the iterative adjustment process, the values of the camera module poses and the values of the three-dimensional spatial positions of the map points should meet a constraint condition required by bundle adjustment. In this embodiment, it can be considered that the vehicle pose measured by the positioning module of the vehicle is relatively accurate, so on the basis of the first vehicle pose sequence, assume the values of the camera module poses and the values of the three-dimensional spatial positions of the map points are relatively accurate, the difference between the first camera module pose sequence and the first vehicle pose sequence is small. Wherein, it can be understood that camera module poses in the first camera module pose sequence may be poses in a camera coordinate system, and the vehicle poses in the first vehicle pose sequences may be poses in a vehicle coordinate system; the camera coordinate system takes the optical center of the camera module as a coordinate origin, and the vehicle coordinate system takes a certain portion of the vehicle (such as the central point of the rear axle) as a coordinate origin; and a transformational relationship between the camera coordinate system and the vehicle coordinate system can be pre-calibrated. Because the difference between the first camera module pose sequence and the first vehicle pose sequence is small, the difference between the first camera module pose sequence and the first vehicle pose sequence can be the transformational relationship between the camera coordinate system and the vehicle coordinate system, that is to say, if the first camera module pose sequence is transformed to the vehicle coordinate system based on the transformational relationship between the camera coordinate system and the vehicle coordinate system, a pose sequence obtained after transformation will coincide with the first vehicle pose sequence.

207: the vehicle-mounted electronic device creates a global SLAM map based on the values of the camera module poses in the pose sequence of the target camera module and the values of the three-dimensional spatial positions of the map points in the current SLAM map under the minimum projection error.

In this embodiment of the present disclosure, the global SLAM map may be a SLAM map finally obtained when the vehicle-mounted electronic device ends the mapping process.

By implementing the method in FIG. 2, the camera system can cover the view scene to the maximum extent in a limited physical space by means of camera modules with different focal lengths, and the influence of the camera modules with different focal lengths on the calculation accuracy of the three-dimensional spatial positions can be reduced by soft focusing, so that the influence on the mapping accuracy is reduced. In addition, the accuracy of the created SLAM map can be further improved by bundle adjustment in conjunction with the positioning module of the vehicle.

### Embodiment 3

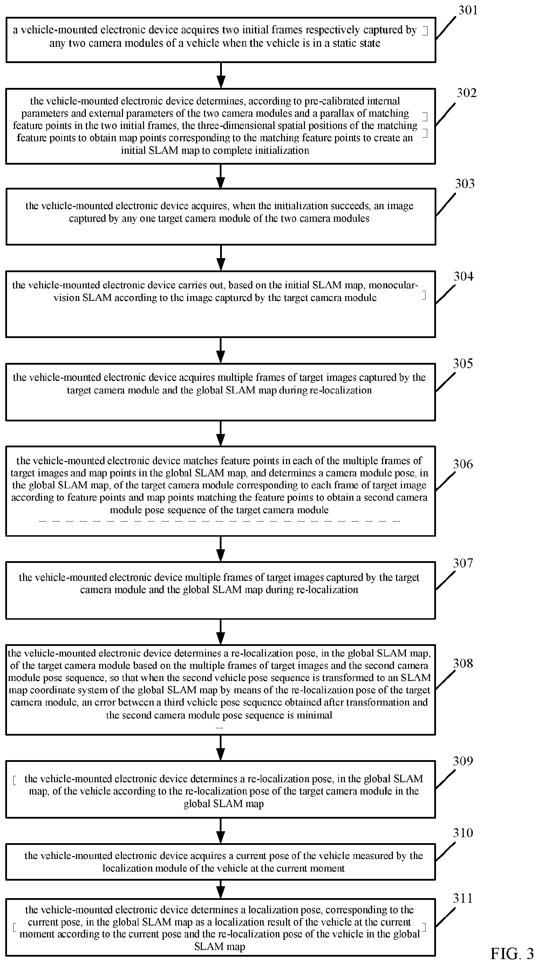

Please refer to FIG. 3 which is flow chart of a SLAM method for a vehicle according to another embodiment of the present disclosure. As shown in FIG. 3, the SLAM method for a vehicle may comprise the following steps:
Steps 301-304 are identical with Steps 101-104, wherein Step 304 can be specifically implemented with reference to Steps 204-206, and will no longer be detailed below.

305: the vehicle-mounted electronic device acquires multiple frames of target images captured by the target camera module and the global SLAM map during re-localization.

In this embodiment of the present disclosure, the global SLAM map is a digital description of a true environment and can be reused by the vehicle-mounted electronic device after being created. Similar to the localization method with a map by humans, the vehicle-mounted electronic device can locate the position of the vehicle in the global SLAM map to acquire the position of the vehicle in the true environment. If the vehicle travels again into the true environment indicated by the global SLAM map, or the feature points are lost in a subsequent localization process after the vehicle is re-located successfully, re-localization can be triggered to determine the position of the vehicle in the global SLAM map again. Specifically, Steps 306-309 are performed to carry out re-localization.

306: the vehicle-mounted electronic device matches feature points in each of the multiple frames of target images and map points in the global SLAM map, and determines a camera module pose, in the global SLAM map, of the target camera module corresponding to each frame of target image according to feature points and map points matching the feature points to obtain a second camera module pose sequence of the target camera module.

In this embodiment of the present disclosure, it can be understood that each frame of image corresponds to one camera module pose in the second camera module pose sequence, and the camera module poses in the second camera module pose sequence are poses of the target camera module in the camera coordinate system.

307: the vehicle-mounted electronic device acquires, by the positioning module of the vehicle, a second vehicle pose sequence of the vehicle corresponding to the second camera module pose sequence.

In this embodiment of the present disclosure, vehicle poses in the second vehicle pose sequence correspond to the camera module poses in the second camera module pose sequence, the vehicle-mounted electronic device can acquire vehicle poses by means of the positioning module at the moment the target camera module captures target images, the vehicle poses constitute the second vehicle pose sequence corresponding to the second camera module pose sequence, and the vehicle poses in the second vehicle pose sequences may be poses in the vehicle coordinate system.

308: the vehicle-mounted electronic device determines a re-localization pose, in the global SLAM map, of the target camera module based on the multiple frames of target images and the second camera module pose sequence, so that when the second vehicle pose sequence is transformed to a SLAM map coordinate system of the global SLAM map by means of the re-localization pose of the target camera module, an error between a third vehicle pose sequence obtained after transformation and the second camera module pose sequence is minimum.

In this embodiment of the present disclosure, the re-localization pose of the target camera module in the global SLAM map, namely a relative transformational relationship (horizontal displacement and rotation) between the pose of the current target camera module and the origin of the global SLAM map coordinate system, is a transformational relationship between the camera coordinate system of the target camera module and the global SLAM map coordinate system; wherein, the origin of the global SLAM map coordinate system may be the position of the optical center when the target camera module captures the initial frame. If the re-localization pose of the target camera module is known, the second vehicle pose sequence in the vehicle coordinate system can be transformed to the global SLAM map based on the transformation relationship between the vehicle coordinate system and the camera coordinate system of the target camera module and the transformational relationship between the camera coordinate system and the global SLAM map coordinate system, and a third vehicle pose sequence obtained after transformation is regarded as a movement track of the vehicle in the map. The second camera module pose sequence can be regarded as a movement track of the target camera module in the map, and if the re-localization pose of the target camera module is accurate, the difference between the movement track of the target camera module in the map and the movement track of the vehicle in the map will be extremely small. Specifically, the difference between the third vehicle pose sequence and the second camera module pose sequence can be the transformational relationship between the camera coordinate system and the vehicle coordinate system.

As an optional implementation, the values of the camera module poses in the second camera module pose sequence can be iteratively adjusted continuously according to a constraint relationship between the target images limited by bundle adjustment, the camera module poses corresponding to the target images, and the three-dimensional spatial positions of the map points, and the second vehicle pose sequence is transformed to the global SLAM map with the value of the last camera module pose in the second camera module pose sequence as the re-localization pose of the target camera module or with the average value of the camera module poses in the second camera module pose sequence as the re-localization pose of the target camera module until the error between the third vehicle pose sequence and the second camera module pose sequence is minimal. The value of the re-localization pose of the target camera module under the minimum error is a final re-localization pose.

309: the vehicle-mounted electronic device determines a re-localization pose, in the global SLAM map, of the vehicle according to the re-localization pose of the target camera module in the global SLAM map.

In this embodiment of the present disclosure, it can be understood that the re-localization pose of the vehicle in the global SLAM map can be determined by means of the re-localization pose of the target camera module according to the transformational relationship between the vehicle coordinate system and the camera coordinate system of the target camera module.

By performing Steps 305-309, the global SLAM map can be reused to locate the vehicle, and the re-localization accuracy can be improved by multi-frame re-localization.

310: the vehicle-mounted electronic device acquires a current pose of the vehicle measured by the positioning module of the vehicle at the current moment.

311: the vehicle-mounted electronic device determines a localization pose, corresponding to the current pose, in the global SLAM map as a localization result of the vehicle at the current moment according to the current pose and the re-localization pose of the vehicle in the global SLAM map.

In this embodiment of the present disclosure, the current pose measured by the positioning module of the vehicle is a pose in the vehicle coordinate system, the re-localization pose of the vehicle in the global SLAM map can be construed as the transformational relation between the vehicle coordinate system and the global SLAM map coordinate system, and thus, the current pose of the vehicle can be transformed to the global SLAM map based on the re-localization pose of the vehicle in the SLAM map.

Because the vehicle localization based on visual SLAM depends on feature point matching, the visual SLAM system cannot carry out localization once the camera modules are shielded or the number of feature points is too small when the camera modules photograph a white wall. So, in this embodiment of the present disclosure, after the vehicle-mounted electronic device carries out re-localization successfully (that is, the re-localization pose of the vehicle in the global SLAM map is determined), the current pose of the vehicle measured by the positioning module of the vehicle is transformed to the SLAM map to be used as a final localization result, so that the dependence of vehicle localization on visual information is reduced, the probability of successful vehicle localization is increased, labile factors in the visual localization process are greatly reduced, and the stability of the system in case where the vision is shielded or visual features are lost is improved.

According to the method described in FIG. 3, a binocular camera system is configured for initialization, and a monocular camera module is configured for mapping after the initialization succeeds, so that the advantages of monocular vision and binocular vision are integrated, the success rate of mapping is increased, and the amount of data to be processed is reduced. Furthermore, during the mapping process, the accuracy of the created SLAM map is further improved by bundle adjustment in conjunction with the positioning module of the vehicle. During re-localization, the re-localization accuracy is improved by multi-frame re-localization; and after re-localization, the current pose measured by the positioning module of the vehicle is transformed to the SLAM map to be used as a localization result, so that the dependence of vehicle localization on visual information is reduced, and the probability of successful vehicle localization is increased.

### Embodiment 4

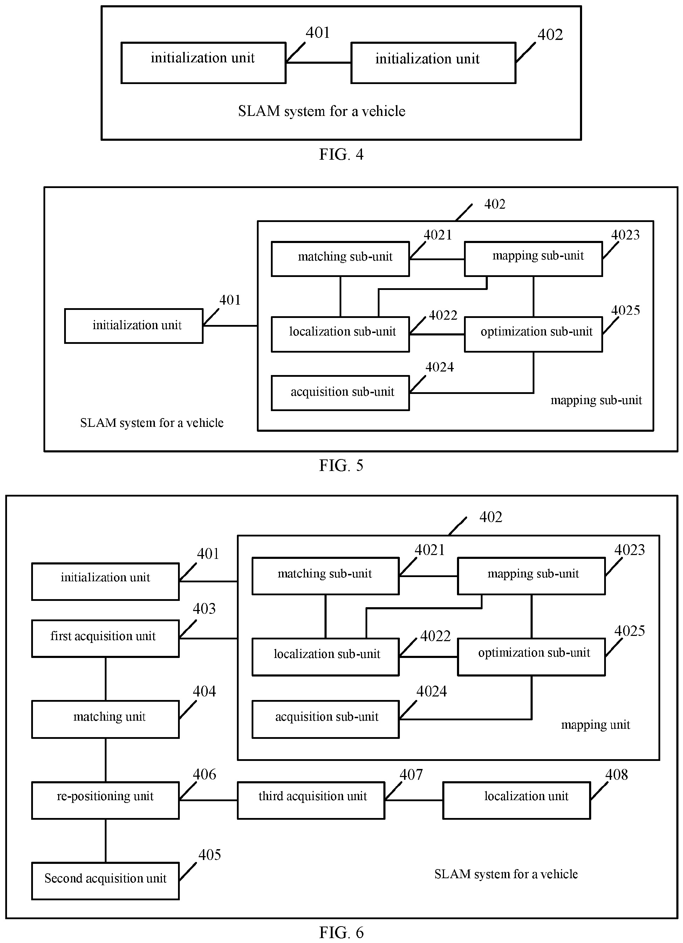

Please refer to FIG. 4 which is a structural diagram of a SLAM system for a vehicle according to one embodiment of the present disclosure. As shown in FIG. 4, the system comprises:
An initialization unit 401 configured for acquiring two initial frames respectively captured by any two camera modules of a vehicle when the vehicle is in a static state, and determining, according to pre-calibrated internal parameters and external parameters of the two camera modules and a parallax of matching feature points in the two initial frames, three-dimensional spatial positions of the matching feature points to obtain map points corresponding to the matching feature points to create an initial SLAM map to complete initialization, wherein view-finding scopes of the two camera modules are at least partially overlapped;

In this embodiment of the present disclosure, the initialization unit 401 acquires images captured by any two camera modules and uses the images as the initial frames; or, the initialization unit 401 acquires images captured by two camera modules, having a farthest relative distance therebetween, (such as the camera modules at two ends) in a multi-view camera system to which the camera modules belong, and use the images as initial frames.

In addition, if the initialization unit 401 determines that the number of feature points in the images corresponding to the overlapped parts of the view-finding scopes of the camera modules is not greater than a preset threshold, the initialization unit 401 controls the camera modules to re-capture images until images, the number of feature points in which is greater than the preset threshold, are acquired and are used as the initial frames.

A mapping unit 402 configured for acquiring, when the initialization succeeds, an image captured by any one target camera module of the two camera modules, and performing, based on the initial SLAM map, monocular-vision SLAM according to the image captured by the target camera module.

In this embodiment of the present disclosure, it can be understood that the mapping unit 402 carries out mapping specifically as follows:
The mapping unit 402 is configured for matching feature points in a first frame of image captured by the target camera module and map points in the initial SLAM map;
For feature points and map points matching feature points, the mapping unit 401 determines a camera (camera module) pose corresponding to the first frame of image according to image positions of the feature points in the first frame of image and three-dimensional spatial positions of the map points matching the feature points;

For each frame of image captured after the first frame of image by the target camera module, the mapping unit 402 repeats the above operation to determine a camera pose corresponding to each frame of image; meanwhile, for feature points without matching map points, these feature points are tracked in the images captured by the target camera module, and three-dimensional spatial positions of these feature points are worked out according to the image positions of these feature points in the images and camera poses corresponding to the images where the feature points are located to obtain new map points which are then added to the SLAM map.

In addition, once detecting a mapping failure in the mapping process, the mapping unit 402 triggers the initialization unit 402 to perform the above operation, so that initialization can be performed again rapidly in case of the mapping failure to conduct mapping again. In this way, data losses between two times of mapping can be reduced for a monocular camera system that carries out initialization in the moving process of the vehicle.

According to the system shown in FIG. 4, a binocular system constituted by two camera modules is configured for initialization, so that initialization can be performed without pulling out the vehicle by a certain distance and can be completed when the vehicle is in a static state; when the initialization succeeds, images captured by one camera muddle are configured for mapping, so that the amount of image data to be processed is reduced; in this way, the advantages of monocular vision and binocular vision are integrated, the success rate of mapping is increased, and the amount of data to be processed is reduced. In addition, initialization can be performed again rapidly in case of a mapping failure, so that data losses between two times of mapping are reduced.

### Embodiment 5

Please refer to FIG. 5 which is a structural diagram of a SLAM system for a vehicle according to another embodiment of the present disclosure. Wherein, the SLAM system for a vehicle in FIG. 5 is obtained by optimizing the SLAM system for a vehicle in FIG. 4.

Wherein, two camera modules in the system shown in FIG. 5 have different focal lengths; correspondingly, the initialization unit 401 acquires two initial frames captured by any two camera modules of a vehicle when the vehicle is in a static state specifically as follows:
The initialization unit 401 is configured for acquiring a first image and a second image that are respectively captured by any two camera modules of the vehicle when the vehicle is in the static state, processing the first image and the second image according to an image effect obtained under the same focal length, and using the processed first image and the processed second image as two initial frames.

Wherein, assume the focal length of one camera module of the two camera modules is fv and the focal length of the other camera module is fc, the same focal length f_{AC} meets the condition: f_{AC}∈[f_{A}, fc]. It can be understood that when parameters of the camera modules are calibrated. In this way, the initialization unit 401 can adjust, by soft focusing, the images captured by two camera modules with different focal lengths to have the same effect as images captured by camera modules with the same focal length, thus reducing the influence of the camera modules with different focal lengths on the calculation accuracy of three-dimensional spatial positions and reducing the influence on the mapping accuracy.

Optionally, the mapping unit 402 of the system shown in FIG. 5 may comprise:
A matching sub-unit 4021 configured for matching feature points in the image captured by the target camera module and map points in a current SLAM map, wherein the current SLAM map is a SLAM map which has been created at the current moment, and when the image is a first frame of image captured by the target camera module, the current SLAM map is the initial SLAM map;
A localization sub-unit 4022 configured for determining a camera module pose corresponding to each frame of image captured by the target camera module according to feature points and map points matching the feature points to obtain a first camera module pose sequence of the target camera module;
A mapping sub-unit 4023 configured for tracking positions, in the images captured by the target camera module, of feature points without matching map points, and determining three-dimensional spatial positions of the feature points without matching map points according to camera module poses corresponding to the images where the feature points without map points are located, to create new map points that are then added to the current SLAM map;
An acquisition sub-unit 4024 configured for acquiring, by a positioning module of the vehicle, a first vehicle pose sequence of the vehicle corresponding to the first camera module pose sequence, wherein the positioning unit may be an inertial measurement unit (IMU), a wheel pulse counter or other sensors, and all these sensors can be used as the positioning module of the vehicle (such as a speedometer) to calculate the travel distance of the vehicle and further locate the position of the vehicle; and
An optimization sub-unit 4025 configured for iteratively adjusting the values of camera module poses in the pose sequence of the target camera module and the values of three-dimensional spatial positions of map points in the current SLAM map until a projection error between the first camera module pose sequence and the first vehicle pose sequence is minimal;

Correspondingly, the mapping sub-unit 4023 is also configured for creating a global SLAM map based on the values of the camera module poses in the pose sequence of the target camera module and the values of the three-dimensional spatial positions of the map points in the current SLAM map under the minimum projection error.

According to the system shown in FIG. 5, the camera system can cover the view scene to the maximum extent in a limited physical space by means of camera modules with different focal lengths, and the influence of the camera modules with different focal lengths on the calculation accuracy of the three-dimensional spatial positions can be reduced by soft focusing, so that the influence on the mapping accuracy is reduced. In addition, the accuracy of the created SLAM map can be further improved by bundle adjustment in conjunction with the positioning module of the vehicle.

### Embodiment 6

Please refer to FIG. 6 which is a structural diagram of a SLAM system for a vehicle according to another embodiment of the present disclosure. Wherein, the SLAM system for a vehicle in FIG. 6 is obtained by optimizing the SLAM system for a vehicle in FIG. 5. As shown in FIG. 6, the SLAM system for a vehicle may further comprise:
A first acquisition unit 403 configured for acquiring multiple frames of target images captured by the target camera module and the global SLAM map during re-localization;
In this embodiment of the present disclosure, the first acquisition unit 403 performs the above operation when the vehicle travels again into the true environment indicated by the global SLAM map, or the feature points are lost in a subsequent localization process after the vehicle is re-located successfully;
A matching unit 404 configured for matching feature points in each of the multiple frames of target images and map points in the global SLAM map, and determining a camera module pose, in the global SLAM map, of the target camera module corresponding to each frame of target image according to feature points and map points matching the feature points to obtain a second camera module pose sequence of the target camera module;
A second acquisition unit 405 configured for acquiring, by the positioning module of the vehicle, a second vehicle pose sequence of the vehicle corresponding to the second camera module pose sequence; and
A re-positioning unit 406 configured for determining a re-localization pose, in the global SLAM map, of the target camera module based on the multiple frames of target images and the second camera module pose sequence, so that when the second vehicle pose sequence is transformed to a SLAM map coordinate system of the global SLAM map by means of the re-localization pose of the target camera module, an error between a third vehicle pose sequence obtained after transformation and the second camera module pose sequence is minimum; and determining a re-localization pose of the vehicle in the global SLAM map according to the re-localization pose of the target camera module in the global SLAM map;

Wherein, the origin of the global SLAM map coordinate system is the position of an optical center when the target camera module captures the initial frame.

Optionally, the system in FIG. 6 may further comprise:
A third acquisition unit 407 configured for acquiring a current pose of the vehicle measured by the positioning module of the vehicle at the current moment after the re-positioning unit determines the re-localization pose of the vehicle in the global SLAM map according to the re-localization pose of the target camera module in the global SLAM map; and
A positioning unit 408 configured for determining a localization pose, corresponding to the current pose, in the global SLAM map as a localization result of the vehicle at the current moment according to the current pose and the re-localization pose of the vehicle in the global SLAM map.

According to the system shown in FIG. 6, a binocular camera system is configured for initialization, and a monocular camera module is configured for mapping after initialization succeeds, so that the advantages of monocular vision and binocular vision are integrated, the success rate of mapping is increased, and the amount of data to be processed is reduced. Furthermore, during the mapping process, the accuracy of the created SLAM map is further improved by bundle adjustment in conjunction with the positioning module of the vehicle. During re-localization, the re-localization accuracy is improved by multi-frame re-localization; and after re-localization, the current pose measured by the positioning module of the vehicle is transformed to the SLAM map to be used as a localization result, so that the dependence of vehicle localization on visual information is reduced, and the probability of successful vehicle localization is increased.

### Embodiment 7

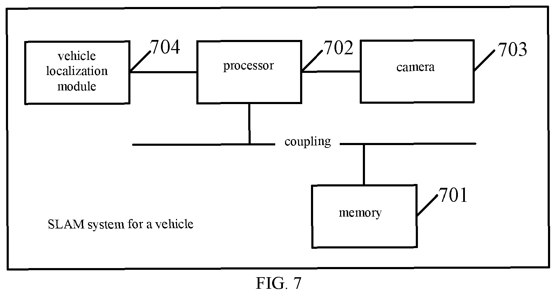

Please refer to FIG. 7 which is a structural diagram of a SLAM system for a vehicle according to another embodiment of the present disclosure. As shown in FIG. 7, the system may comprise:
A memory 701 having an executable program code stored therein;
A processor 702 coupled to the memory 701;
A camera module 703; and
A vehicle positioning module 704;

Wherein, images captured by the camera module 703 and vehicle poses detected by the vehicle positioning module 704 are transmitted to the processor 702, and the processor 702 calls the executable program code stored in the memory 701 to implement the SLAM methodfor a vehicle shown in any one of FIG. 1-FIG. 3.

One embodiment of the present disclosure discloses a vehicle comprising the SLAM system for a vehicle shown in FIG. 4-FIG. 7.

One embodiment of the present disclosure discloses a computer-readable storage medium having a computer program stored therein, wherein the computer program enables a computer to implement the SLAM method for a vehicle shown in any one of FIG. 1-FIG. 3.

One embodiment of the present disclosure discloses a computer program product comprising a non-transient computer-readable storage medium having a computer program stored therein, and the computer program can be operated to enable a computer to implement the SLAM method for a vehicle shown in any one of FIG. 1-FIG. 3.

It should be noted that "one embodiment" or "an embodiment" mentioned in the whole specification means that specific features, structures or characteristics related to said embodiment is included in at least one embodiment of the present disclosure. Therefore, "in one embodiment" or "in an embodiment" in the specification does not definitely refer to the same embodiment. In addition, these features, structures or characteristics can be combined in one or more embodiments in any appropriate manners. Those skilled in the art should understand that the embodiments described in the specification are optional ones, and actions and modules involved in these optional embodiments are not definitely indispensable to the present disclosure.

It should be noted that the serial numbers of the processes in the embodiments of the present disclosure do not indicate the execution sequence of these processes, and the execution sequence of the processes depends on the function and internal logic of the processes and should not limit the implementation of the embodiments of the present disclosure in any way.

The units described as separable components may be or may be not physically separated, and components displayed as units may be or may be not object units, that is, they may be located in the same place or be distributed in multiple network units. All or part of these units can be selected to fulfill the purposes of the solutions of the embodiments as actually needed.

In addition, the functional units in the embodiments of the present disclosure may be integrated in one processing unit or be physically separated, or two or more units may be integrated in one unit. The integrated units may be implemented in the form of hardware or in the form of software functional units.

When implemented in the form of software functional units and sold or used as independent products, the integrated units may be stored in a computer-accessible memory. On the basis of such a understanding, the technical solution of the present disclosure, or parts, making a contribution to the prior art, of the technical solution, or all or part of the technical solution may be embodied in the form of a software product which is stored in a memory comprising a plurality of requests to enable a computer device (such as a personal computer, a server or a network device, more specifically a processor in the computer device) to perform all or part of the steps of the method in the above embodiments.

Those ordinarily skilled in the art would appreciate that all or part of the steps of the method in the above embodiments may be implemented by relevant hardware instructed by a program which is stored in a readable storage medium, which is a Read-Only Memory (ROM), a Random Access Memory (RAM), a Programmable Read-only Memory (PROM), an Erasable Programmable Read Only Memory (EPROM), a One-time Programmable Read-Only Memory (EPROM), a One-time Programmable Read-Only Memory (OTPROM), an Electrically-Erasable Programmable Read-Only Memory (EEPROM), a Compact Disc Read-Only Memory (CD-ROM), other optical disc memories, disk memories and magnetic tape memories, or any other computer-readable media for carrying or storing data.

The SLAM method and system for a vehicle disclosed by the embodiments of the present disclosure have been introduced in detail above. In this specification, the principle and implementation of the present disclosure are expounded with embodiments, but the description of the above embodiments is merely for assisting those skilled in the art in understanding the method and core concept thereof of the present disclosure. Moreover, those ordinarily skilled in the art can make variations to the specific implementation and application scope based on the concept of the present disclosure as long as they are covered by the appended claims.

## Claims

1. A SLAM method for a vehicle, **characterized in that**, the method comprises:
acquiring (101) two initial frames respectively captured by any two camera modules of a vehicle when the vehicle is in a static state, wherein view-finding scopes of the two camera modules are at least partially overlapped;
determining (102), according to pre-calibrated internal parameters and external parameters of the two camera modules and a parallax of matching feature points in the two initial frames, three-dimensional spatial positions of the matching feature points to obtain map points corresponding to the matching feature points to create an initial SLAM map to complete initialization;
acquiring (103), when the initialization succeeds, an image captured by any one target camera module of the two camera modules; and
performing (104), based on the initial SLAM map, monocular-vision SLAM according to the image captured by the target camera module;
wherein the performing (104), based on the initial SLAM map, monocular-vision SLAM according to the image captured by the target camera module, comprises:
matching feature points in the image captured by the target camera module and map points in a current SLAM map, wherein when the image is a first frame of image captured by the target camera module, the current SLAM map is the initial SLAM map;
determining a camera module pose corresponding to each frame of image captured by the target camera module according to feature points and map points matching the feature points to obtain a first camera module pose sequence of the target camera module;
tracking positions, in the images captured by the target camera module, of feature points without matching map points, and determining three-dimensional spatial positions of the feature points without matching map points according to camera module poses corresponding to the images where the feature points without matching map points are located, to create new map points which are then added to the current SLAM map;
acquiring, by a positioning module of the vehicle, a first vehicle pose sequence of the vehicle corresponding to the first camera module pose sequence;
iteratively adjusting values of camera module poses in the pose sequence of the target camera module and values of three-dimensional spatial positions of map points in the current SLAM map until a projection error between the first camera module pose sequence and the first vehicle pose sequence is minimal; and
creating a global SLAM map based on the values of the camera module poses in the pose sequence of the target camera module and the values of the three-dimensional spatial positions of the map points in the current SLAM map under the minimum projection error.

2. The method according to claim 1, **characterized in that**, the method further comprises:
acquiring multiple frames of target images captured by the target camera module and the global SLAM map during re-localization;
matching feature points in each of the multiple frames of target images and map points in the global SLAM map;
determining a camera module pose, in the global SLAM map, of the target camera module corresponding to each frame of target image according to feature points and map points matching feature points to obtain a second camera module pose sequence of the target camera module;
acquiring, by the positioning module of the vehicle, a second vehicle pose sequence of the vehicle corresponding to the second camera module pose sequence;
determining a re-localization pose, in the global SLAM map, of the target camera module based on the multiple frames of target images and the second camera module pose sequence, so that when the second vehicle pose sequence is transformed to a SLAM map coordinate system of the global SLAM map by means of the re-localization pose of the target camera module, an error between a third vehicle pose sequence obtained after transformation and the second camera module pose sequence is minimal, wherein an origin of the global SLAM map coordinate system is a position of an optical center when the target camera module captures the initial frame; and
determining a re-localization pose, in the global SLAM map, of the vehicle according to the re-localization pose of the target camera module in the global SLAM map.

3. The method according to claim 2, **characterized in that**, after the determining a re-localization pose, in the global SLAM map, of the vehicle according to the re-localization pose of the target camera module in the global SLAM map, the method further comprises:
acquiring a current pose of the vehicle measured by the positioning module of the vehicle at a current moment; and
determining a localization pose, corresponding to the current pose, in the global SLAM map as a localization result of the vehicle at the current moment according to the current pose and the re-localization pose of the vehicle in the global SLAM map.

4. A SLAM system for a vehicle, **characterized in that**, the system comprises:
an initialization unit (401) configured for acquiring two initial frames respectively captured by any two camera modules of a vehicle when the vehicle is in a static state, and determining, according to pre-calibrated internal parameters and external parameters of the two camera modules and a parallax of matching feature points in the two initial frames, three-dimensional spatial positions of the matching feature points to obtain map points corresponding to the matching feature points to create an initial SLAM map to complete initialization, wherein view-finding scopes of the two camera modules are at least partially overlapped;
a mapping unit (402) configured for acquiring, when the initialization succeeds, an image captured by any one target camera module of the two camera modules, and performing, based on the initial SLAM map, monocular-vision SLAM according to the image captured by the target camera module;
wherein the mapping unit (402) comprises:
a matching sub-unit (4021) configured for matching feature points in the image captured by the target camera module and map points in a current SLAM map, wherein when the image is a first frame of image captured by the target camera module, the current SLAM map is the initial SLAM map;
a localization sub-unit (4022) configured for determining a camera module pose corresponding to each frame of image captured by the target camera module according to feature points and map points matching the feature points to obtain a first camera module pose sequence of the target camera module;
a mapping sub-unit (4023) configured for tracking positions, in the images captured by the target camera module, of feature points without matching map points, and determining three-dimensional spatial positions of the feature points without matching map points according to camera module poses corresponding to the images where the feature points without matching map points are located, to create new map points which are then added to the current SLAM map;
an acquisition sub-unit (4024) configured for acquiring, by a positioning module of the vehicle, a first vehicle pose sequence of the vehicle corresponding to the first camera module pose sequence; and
an optimization sub-unit (4025) configured for iteratively adjusting values of camera module poses in the pose sequence of the target camera module and values of three-dimensional spatial positions of map points in the current SLAM map until a projection error between the first camera module pose sequence and the first vehicle pose sequence is minimal;
wherein, the mapping sub-unit is also configured for creating a global SLAM map based on the values of the camera module poses in the pose sequence of the target camera module and the values of the three-dimensional spatial positions of the map points in the current SLAM map under the minimum projection error.

5. The system according to claim 4, **characterized in that**, the system further comprises:
a first acquisition unit (403) configured for acquiring multiple frames of target images captured by the target camera module and the global SLAM map during re-localization;
a matching unit (404) configured for matching feature points in each of the multiple frames of target images and map points in the global SLAM map, and determining a camera module pose, in the global SLAM map, of the target camera module corresponding to each frame of target image according to feature points and map points matching feature points to obtain a second camera module pose sequence of the target camera module;
a second acquisition unit (405) configured for acquiring, by the positioning module of the vehicle, a second vehicle pose sequence of the vehicle corresponding to the second camera module pose sequence; and
a re-positioning unit (406) configured for determining a re-localization pose, in the global SLAM map, of the target camera module based on the multiple frames of target images and the second camera module pose sequence, so that when the second vehicle pose sequence is transformed to a SLAM map coordinate system of the global SLAM map by means of the re-localization pose of the target camera module, an error between a third vehicle pose sequence obtained after transformation and the second camera module pose sequence is minimal; and determining a re-localization pose, in the global SLAM map, of the vehicle according to the re-localization pose of the target camera module in the global SLAM map;
wherein, an origin of the global SLAM map coordinate system is a position of an optical center when the target camera module captures the initial frame.

6. The system according to claim 5, **characterized in that**, the system further comprises:
a third acquisition unit (407) configured for acquiring a current pose of the vehicle measured by the positioning module of the vehicle at a current moment after the re-positioning unit determines the re-localization pose of the vehicle in the global SLAM map according to the re-localization pose of the target camera module in the global SLAM map; and
a positioning unit (408) configured for determining a localization pose, corresponding to the current pose, in the global SLAM map as a localization result of the vehicle at the current moment according to the current pose and the re-localization pose of the vehicle in the global SLAM map.

7. A vehicle, comprising the SLAM system for a vehicle according to any one of claims 4-6.

## Patentansprüche

1. SLAM-Verfahren für ein Fahrzeug, **dadurch gekennzeichnet, dass** das Verfahren umfasst:
Erfassen (101) von zwei Anfangs-Frames, die jeweils durch zwei beliebige Kameramodule eines Fahrzeugs aufgenommen werden, wenn sich das Fahrzeug in einem statischen Zustand befindet, wobei sich die Sucherbereiche der zwei Kameramodule mindestens teilweise überlappen;
Bestimmen (102), gemäß vorkalibrierten internen Parametern und externen Parametern der zwei Kameramodule und einer Parallaxe von übereinstimmenden Merkmalspunkten in den zwei Anfangs-Frames, von dreidimensionalen räumlichen Positionen der übereinstimmenden Merkmalspunkte, um Kartenpunkte zu erhalten, die den übereinstimmenden Merkmalspunkten entsprechen, um eine anfängliche SLAM-Karte zu erzeugen, um die Initialisierung zu vollenden;
Erfassen (103), wenn die Initialisierung erfolgreich ist, eines Bildes, das durch ein beliebiges Zielkameramodul der zwei Kameramodule aufgenommen wurde; und
Durchführen (104), auf der Grundlage der anfänglichen SLAM-Karte, eines Monokularsicht-SLAM gemäß dem durch das Zielkameramodul aufgenommenen Bild;
wobei das Durchführen (104), auf der Grundlage der anfänglichen SLAM-Karte, eines Monokularsicht-SLAM gemäß dem durch das Zielkameramodul aufgenommenen Bildes umfasst:
Abgleichen von Merkmalspunkten in dem durch das Zielkameramodul aufgenommenen Bild und Kartenpunkten in einer momentanen SLAM-Karte, wobei, wenn das Bild ein erster durch das Zielkameramodul aufgenommener Bild-Frame ist, die momentane SLAM-Karte die anfängliche SLAM-Karte ist;
Bestimmen einer Kameramodul-Lage, die jedem durch das Zielkameramodul aufgenommenen Bild-Frame entspricht, gemäß Merkmalspunkten und Kartenpunkten, die mit den Merkmalspunkten übereinstimmen, um eine erste Kameramodul-Lagesequenz des Zielkameramoduls zu erhalten;
Verfolgen von Positionen, in den durch das Zielkameramodul aufgenommenen Bildern, von Merkmalspunkten ohne übereinstimmende Kartenpunkte, und Bestimmen dreidimensionaler räumlicher Positionen der Merkmalspunkte ohne übereinstimmende Kartenpunkte gemäß den Kameramodul-Lagen, die den Bildern entsprechen, in denen sich die Merkmalspunkte ohne übereinstimmende Kartenpunkte befinden, um neue Kartenpunkte zu erzeugen, die dann zu der momentanen SLAM-Karte hinzugefügt werden;
Erfassen, durch ein Positionierungsmodul des Fahrzeugs, einer ersten Fahrzeug-Lagesequenz des Fahrzeugs, die der ersten Kameramodul-Lagesequenz entspricht;
iteratives Einstellen von Werten von Kameramodul-Lagen in der Lagensequenz des Zielkameramoduls und von Werten dreidimensionaler räumlicher Positionen von Kartenpunkten in der momentanen SLAM-Karte, bis ein Projektionsfehler zwischen der ersten Kameramodul-Lagensequenz und der ersten Fahrzeug-Lagensequenz minimal ist; und
Erzeugen einer globalen SLAM-Karte auf der Grundlage der Werte der Kameramodul-Lagen in der Lagesequenz des Zielkameramoduls und der Werte der dreidimensionalen räumlichen Positionen der Kartenpunkte in der momentanen SLAM-Karte unter dem minimalen Projektionsfehler.

2. Verfahren nach Anspruch 1, **dadurch gekennzeichnet, dass** das Verfahren des Weiteren umfasst:
Erfassen mehrerer Frames von Zielbildern, die durch das Zielkameramodul aufgenommen wurden, und der globalen SLAM-Karte während der Relokalisierung;
Abgleichen von Merkmalspunkten in jedem der mehreren Frames von Zielbildern und Kartenpunkten in der globalen SLAM-Karte;
Bestimmen einer Kameramodul-Lage, in der globalen SLAM-Karte, des Zielkameramoduls, die jedem Frame des Zielbildes entspricht, gemäß Merkmalspunkten und Kartenpunkten, die mit Merkmalspunkten übereinstimmen, um eine zweite Kameramodul-Lagesequenz des Zielkameramoduls zu erhalten;
Erfassen, durch das Positionierungsmodul des Fahrzeugs, einer zweiten Fahrzeug-Lagesequenz des Fahrzeugs, die der zweiten Kameramodul-Lagesequenz entspricht;
Bestimmen einer Relokalisierungslage, in der globalen SLAM-Karte, des Zielkameramoduls auf der Grundlage der mehreren Frames von Zielbildern und der zweiten Kameramodul-Lagesequenz so, dass, wenn die zweite Fahrzeug-Lagesequenz mittels der Relokalisierungslage des Zielkameramoduls in ein SLAM-Karten-Koordinatensystem der globalen SLAM-Karte transformiert wird, ein Fehler zwischen einer dritten Fahrzeug-Lagesequenz, die nach der Transformation erhalten wird, und der zweiten Kameramodul-Lagesequenz minimal ist, wobei ein Ursprung des globalen SLAM-Karten-Koordinatensystems eine Position einer optischen Mitte ist, wenn das Zielkameramodul den Anfangs-Frame aufnimmt; und
Bestimmen einer Relokalisierungslage, in der globalen SLAM-Karte, des Fahrzeugs gemäß der Relokalisierungslage des Zielkameramoduls in der globalen SLAM-Karte.

3. Verfahren nach Anspruch 2, **dadurch gekennzeichnet, dass**, nach dem Bestimmen einer Relokalisierungslage, in der globalen SLAM-Karte, des Fahrzeugs gemäß der Relokalisierungslage des Zielkameramoduls in der globalen SLAM-Karte, das Verfahren des Weiteren umfasst:
Erfassen einer momentanen Lage des Fahrzeugs, die durch das Positionierungsmodul des Fahrzeugs zu einem momentanen Zeitpunkt gemessen wird; und
Bestimmen einer Lokalisierungslage, die der momentanen Lage entspricht, in der globalen SLAM-Karte als ein Lokalisierungsergebnis des Fahrzeugs zu dem momentanen Zeitpunkt gemäß der momentanen Lage und der Relokalisierungslage des Fahrzeugs in der globalen SLAM-Karte.

4. SLAM-System für ein Fahrzeug, **dadurch gekennzeichnet, dass** das System umfasst:
eine Initialisierungseinheit (401), die dafür eingerichtet ist, zwei Anfangs-Frames zu erfassen, die jeweils durch zwei beliebige Kameramodule eines Fahrzeugs aufgenommen werden, wenn sich das Fahrzeug in einem statischen Zustand befindet, und gemäß vorkalibrierten internen Parametern und externen Parametern der zwei Kameramodule und einer Parallaxe von übereinstimmenden Merkmalspunkten in den zwei Anfangs-Frames dreidimensionale räumliche Positionen der übereinstimmenden Merkmalspunkte zu bestimmen, um Kartenpunkte zu erhalten, die den übereinstimmenden Merkmalspunkten entsprechen, um eine anfängliche SLAM-Karte zu erzeugen, um die Initialisierung zu vollenden, wobei sich Sucherbereiche der zwei Kameramodule mindestens teilweise überlappen;
eine Kartierungseinheit (402), die dafür eingerichtet ist, wenn die Initialisierung erfolgreich ist, ein Bild zu erfassen, das durch ein beliebiges Zielkameramodul der zwei Kameramodule aufgenommen wurde, und auf der Grundlage der anfänglichen SLAM-Karte eine Monokularsicht-SLAM gemäß dem durch das Zielkameramodul aufgenommenen Bild durchzuführen;
wobei die Kartierungseinheit (402) umfasst:
eine Abgleichsuntereinheit (4021), die dafür eingerichtet ist, Merkmalspunkte in dem durch das Zielkameramodul aufgenommenen Bild und Kartenpunkte in einer momentanen SLAM-Karte abzugleichen, wobei, wenn das Bild ein erster durch das Zielkameramodul aufgenommener Bild-Frame ist, die momentane SLAM-Karte die anfängliche SLAM-Karte ist;
eine Lokalisierungsuntereinheit (4022), die dafür eingerichtet ist, eine Kameramodul-Lage, die jedem durch das Zielkameramodul aufgenommenen Bild-Frame entspricht, gemäß Merkmalspunkten und Kartenpunkten, die mit den Merkmalspunkten übereinstimmen, zu bestimmen, um eine erste Kameramodul-Lagesequenz des Zielkameramoduls zu erhalten;
eine Kartierungsuntereinheit (4023), die dafür eingerichtet ist, in den durch das Zielkameramodul aufgenommenen Bildern Positionen von Merkmalspunkten ohne übereinstimmende Kartenpunkte zu verfolgten und dreidimensionale räumliche Positionen der Merkmalspunkte ohne übereinstimmende Kartenpunkte gemäß den Kameramodul-Lagen, die den Bildern entsprechen, in denen sich die Merkmalspunkte ohne übereinstimmende Kartenpunkte befinden, zu bestimmen, um neue Kartenpunkte zu erzeugen, die dann zu der momentanen SLAM-Karte hinzugefügt werden;
eine Erfassungsuntereinheit (4024), die dafür eingerichtet ist, durch ein Positionierungsmodul des Fahrzeugs eine erste Fahrzeug-Lagesequenz des Fahrzeugs, die der ersten Kameramodul-Lagesequenz entspricht, zu erfassen; und
eine Optimierungsuntereinheit (4025), die dafür eingerichtet ist, iterativ Werte von Kameramodul-Lagen in der Lagesequenz des Zielkameramoduls und Werte von dreidimensionalen räumlichen Positionen von Kartenpunkten in der momentanen SLAM-Karte einzustellen, bis ein Projektionsfehler zwischen der ersten Kameramodul-Lagensequenz und der ersten Fahrzeug-Lagensequenz minimal ist; und
wobei die Kartierungsuntereinheit außerdem zum Erzeugen einer globalen SLAM-Karte auf der Grundlage der Werte der Kameramodul-Lagen in der Lagesequenz des Zielkameramoduls und der Werte der dreidimensionalen räumlichen Positionen der Kartenpunkte in der momentanen SLAM-Karte unter dem minimalen Projektionsfehler eingerichtet ist.

5. System nach Anspruch 4, **dadurch gekennzeichnet, dass** das System des Weiteren umfasst:
eine erste Erfassungseinheit (403), die dafür eingerichtet ist, mehrere Frames von Zielbildern, die durch das Zielkameramodul aufgenommen wurden, und die globale SLAM-Karte während der Relokalisierung zu erfassen;
eine Abgleichseinheit (404), die dafür eingerichtet ist, Merkmalspunkte in jedem der mehreren Frames von Zielbildern und Kartenpunkte in der globalen SLAM-Karte abzugleichen und eine Kameramodul-Lage, in der globalen SLAM-Karte, des Zielkameramoduls, die jedem Frame des Zielbildes entspricht, gemäß Merkmalspunkten und Kartenpunkten, die mit Merkmalspunkten übereinstimmen, zu bestimmen, um eine zweite Kameramodul-Lagesequenz des Zielkameramoduls zu erhalten;
eine zweite Erfassungseinheit (405), die dafür eingerichtet ist, durch das Positionierungsmodul des Fahrzeugs eine zweite Fahrzeug-Lagesequenz des Fahrzeugs, die der zweiten Kameramodul-Lagesequenz entspricht, zu erfassen; und
eine Repositionierungseinheit (406), die dafür eingerichtet ist, eine Relokalisierungslage, in der globalen SLAM-Karte, des Zielkameramoduls auf der Grundlage der mehreren Frames von Zielbildern und der zweiten Kameramodul-Lagesequenz so zu bestimmen, dass, wenn die zweite Fahrzeug-Lagesequenz mittels der Relokalisierungslage des Zielkameramoduls in ein SLAM-Karten-Koordinatensystem der globalen SLAM-Karte transformiert wird, ein Fehler zwischen einer dritten Fahrzeug-Lagesequenz, die nach der Transformation erhalten wird, und der zweiten Kameramodul-Lagesequenz minimal ist; und eine Relokalisierungslage, in der globalen SLAM-Karte, des Fahrzeugs gemäß der Relokalisierungslage des Zielkameramoduls in der globalen SLAM-Karte zu bestimmen;
wobei ein Ursprung des globalen SLAM-Karten-Koordinatensystems eine Position einer optischen Mitte ist, wenn das Zielkameramodul den Anfangs-Frame aufnimmt.

6. System nach Anspruch 5, **dadurch gekennzeichnet, dass** das System des Weiteren umfasst:
eine dritte Erfassungseinheit (407), die dafür eingerichtet ist, eine momentane Lage des Fahrzeugs zu erfassen, die durch das Positionierungsmodul des Fahrzeugs zu dem momentanen Zeitpunkt gemessen wird, nachdem die Repositionierungseinheit die Relokalisierungslage des Fahrzeugs in der globalen SLAM-Karte gemäß der Relokalisierungslage des Zielkameramoduls in der globalen SLAM-Karte bestimmt hat; und
eine Positionierungseinheit (408), die dafür eingerichtet ist, eine Lokalisierungslage, die der momentanen Lage entspricht, in der globalen SLAM-Karte als ein Lokalisierungsergebnis des Fahrzeugs zu dem momentanen Zeitpunkt gemäß der momentanen Lage und der Relokalisierungslage des Fahrzeugs in der globalen SLAM-Karte zu bestimmen.

7. Fahrzeug, umfassend das SLAM-System für ein Fahrzeug nach einem der Ansprüche 4-6.

## Revendications

1. Procédé de SLAM pour un véhicule, **caractérisé en ce que** le procédé comprend de :
acquérir (101) deux trames initiales respectivement capturées par deux modules de caméra quelconques d'un véhicule lorsque le véhicule est dans un état statique, dans lequel des champs de visée des deux modules de caméra se chevauchent au moins partiellement ;
déterminer (102), en fonction de paramètres internes et de paramètres externes pré-étalonnés des deux modules de caméra et d'une parallaxe de points de caractéristiques concordants dans les deux trames initiales, des positions spatiales tridimensionnelles des points de caractéristiques concordants pour obtenir des points de carte correspondant aux points de caractéristiques concordants pour créer une carte de SLAM initiale pour terminer l'initialisation ;
acquérir (103), lorsque l'initialisation réussit, une image capturée par un module de caméra cible quelconque parmi les deux modules de caméra ; et
réaliser (104), sur la base de la carte de SLAM initiale, un SLAM en vision monoculaire en fonction de l'image capturée par le module de caméra cible ;
dans lequel la réalisation (104), sur la base de la carte de SLAM initiale, d'un SLAM en vision monoculaire en fonction de l'image capturée par le module de caméra cible, comprend de :
mettre en correspondance des points de caractéristiques dans l'image capturée par le module de caméra cible avec des points de carte dans une carte de SLAM actuelle, dans lequel lorsque l'image est une première trame d'image capturée par le module de caméra cible, la carte de SLAM actuelle est la carte de SLAM initiale ;
déterminer une pose de module de caméra correspondant à chaque trame d'image capturée par le module de caméra cible en fonction de points de caractéristiques et de points de carte concordant avec les points de caractéristiques afin d'obtenir une première séquence de poses de module de caméra du module de caméra cible ;
suivre des positions, dans les images capturées par le module de caméra cible, de points de caractéristiques sans points de carte concordants, et déterminer des positions spatiales tridimensionnelles des points de caractéristiques sans points de carte concordants en fonction de poses de module de caméra correspondant aux images où les points de caractéristiques sans points cartographiques concordants sont situés, pour créer de nouveaux points de carte qui sont ensuite ajoutés à la carte de SLAM actuelle ;
acquérir, par un module de positionnement du véhicule, une première séquence de poses de véhicule du véhicule correspondant à la première séquence de poses de module de caméra ;
régler de manière itérative des valeurs de poses de module de caméra dans la séquence de poses du module de caméra cible et des valeurs de positions spatiales tridimensionnelles de points de carte dans la carte de SLAM actuelle jusqu'à ce qu'une erreur de projection entre la première séquence de poses de module de caméra et la première séquence de poses de véhicule soit minimale ; et
créer une carte de SLAM globale sur la base des valeurs des poses de module de caméra dans la séquence de poses du module de caméra cible et des valeurs des positions spatiales tridimensionnelles des points de carte dans la carte de SLAM actuelle sous l'erreur de projection minimale.

2. Procédé selon la revendication 1, **caractérisé en ce que** le procédé comprend en outre de :
acquérir de multiples trames d'images cibles capturées par le module de caméra cible et la carte de SLAM globale pendant une relocalisation ;
mettre en correspondance des points de caractéristiques dans chacune des multiples trames d'images cibles avec des points de carte dans la carte de SLAM globale ;
déterminer une pose de module de caméra, dans la carte de SLAM globale, du module de caméra cible correspondant à chaque trame d'image cible en fonction de points de caractéristiques et de points de carte concordant avec des points de caractéristiques pour obtenir une deuxième séquence de poses de module de caméra du module de caméra cible ;
acquérir, par le module de positionnement du véhicule, une deuxième séquence de poses de véhicule du véhicule correspondant à la deuxième séquence de poses de module de caméra ;
déterminer une pose de relocalisation, dans la carte de SLAM globale, du module de caméra cible sur la base des multiples trames d'images cibles et de la deuxième séquence de poses de module de caméra, de sorte que lorsque la deuxième séquence de poses de véhicule est transformée en un système de coordonnées de carte de SLAM de la carte de SLAM globale au moyen de la pose de relocalisation du module de caméra cible, une erreur entre une troisième séquence de poses de véhicule obtenue après transformation et la deuxième séquence de poses de module de caméra est minimale, dans lequel une origine du système de coordonnées de carte de SLAM globale est une position d'un centre optique lorsque le module de caméra cible capture la trame initiale ; et
déterminer une pose de relocalisation, dans la carte de SLAM globale, du véhicule en fonction de la pose de relocalisation du module de caméra cible dans la carte de SLAM globale.

3. Procédé selon la revendication 2, **caractérisé en ce que**, après la détermination d'une pose de relocalisation, dans la carte de SLAM globale, du véhicule en fonction de la pose de relocalisation du module de caméra cible dans la carte de SLAM globale, le procédé comprend en outre de :
acquérir une pose actuelle du véhicule mesurée par le module de positionnement du véhicule à un instant actuel ; et
déterminer une pose de localisation, correspondant à la pose actuelle, dans la carte de SLAM globale en tant que résultat de localisation du véhicule à l'instant actuel en fonction de la pose actuelle et de la pose de relocalisation du véhicule dans la carte de SLAM globale.

4. Système de SLAM pour un véhicule, **caractérisé en ce que** le système comprend :
une unité d'initialisation (401) configurée pour acquérir deux trames initiales respectivement capturées par deux modules de caméra quelconques d'un véhicule lorsque le véhicule est dans un état statique, et déterminer, en fonction de paramètres internes et de paramètres externes pré-étalonnés des deux modules de caméra et d'une parallaxe de points de caractéristiques concordants dans les deux trames initiales, des positions spatiales tridimensionnelles des points de caractéristiques concordants pour obtenir des points de carte correspondant aux points de caractéristiques concordants pour créer une carte de SLAM initiale pour terminer l'initialisation, dans lequel des champs de visée des deux modules de caméra se chevauchent au moins partiellement ;
une unité cartographique (402) configurée pour acquérir, lorsque l'initialisation réussit, une image capturée par un module de caméra cible quelconque parmi les deux modules de caméra, et pour réaliser, sur la base de la carte de SLAM initiale, un SLAM en vision monoculaire en fonction de l'image capturée par le module de caméra cible ;
dans lequel l'unité cartographique (402) comprend :
une sous-unité de mise en correspondance (4021) configurée pour mettre en correspondance des points de caractéristiques dans l'image capturée par le module de caméra cible et des points de carte dans une carte de SLAM actuelle, dans lequel lorsque l'image est une première trame d'image capturée par le module de caméra cible, la carte de SLAM actuelle est la carte de SLAM initiale ;
une sous-unité de localisation (4022) configurée pour déterminer une pose de module de caméra correspondant à chaque trame d'image capturée par le module de caméra cible en fonction de points de caractéristiques et de points de carte concordant avec les points de caractéristiques pour obtenir une première séquence de poses de module de caméra du module de caméra cible ;
une sous-unité cartographique (4023) configurée pour suivre des positions, dans les images capturées par le module de caméra cible, de points de caractéristiques sans points de carte concordants, et déterminer des positions spatiales tridimensionnelles des points de caractéristiques sans points de carte concordants en fonction de poses de module de caméra correspondant aux images où les points de caractéristiques sans points de carte concordants sont situés, pour créer de nouveaux points de carte qui sont ensuite ajoutés à la carte de SLAM actuelle ;
une sous-unité d'acquisition (4024) configurée pour acquérir, par un module de positionnement du véhicule, une première séquence de poses de véhicule du véhicule correspondant à la première séquence de poses de module de caméra ; et
une sous-unité d'optimisation (4025) configurée pour régler de manière itérative des valeurs de poses de module de caméra dans la séquence de poses du module de caméra cible et des valeurs de positions spatiales tridimensionnelles de points de carte dans la carte de SLAM actuelle jusqu'à ce qu'une erreur de projection entre la première séquence de poses de module de caméra et la première séquence de poses de véhicule soit minimale ;
dans lequel la sous-unité cartographique est également configurée pour créer une carte de SLAM globale sur la base des valeurs des poses de module de caméra dans la séquence de poses du module de caméra cible et des valeurs des positions spatiales tridimensionnelles des points de carte dans la carte de SLAM actuelles sous l'erreur de projection minimale.

5. Système selon la revendication 4, **caractérisé en ce que** le système comprend en outre :
une première unité d'acquisition (403) configurée pour acquérir de multiples trames d'images cibles capturées par le module de caméra cible et la carte de SLAM globale pendant une relocalisation ;
une unité de mise en correspondance (404) configurée pour mettre en correspondance des points de caractéristiques dans chacune des multiples trames d'images cibles et des points de carte dans la carte de SLAM globale, et déterminer une pose de module de caméra, dans la carte de SLAM globale, du module de caméra cible correspondant à chaque trame d'image cible en fonction de points de caractéristiques et de points de carte concordant avec des points de caractéristiques pour obtenir une deuxième séquence de poses de module de caméra du module de caméra cible ;
une deuxième unité d'acquisition (405) configurée pour acquérir, par le module de positionnement du véhicule, une deuxième séquence de poses de véhicule du véhicule correspondant à la deuxième séquence de poses de module de caméra ; et
une unité de repositionnement (406) configurée pour déterminer une pose de relocalisation, dans la carte de SLAM globale, du module de caméra cible sur la base des multiples trames d'images cibles et de la deuxième séquence de poses de module de caméra, de sorte que lorsque la deuxième séquence de poses de véhicule est transformée en un système de coordonnées de carte de SLAM de la carte de SLAM globale au moyen de la pose de relocalisation du module de caméra cible, une erreur entre une troisième séquence de poses de véhicule obtenue après transformation et la deuxième séquence de poses de module de caméra est minimale ; et déterminer une pose de relocalisation, dans la carte de SLAM globale, du véhicule en fonction de la pose de relocalisation du module de caméra cible dans la carte de SLAM globale ;
dans lequel une origine du système de coordonnées de carte de SLAM globale est une position d'un centre optique lorsque le module de caméra cible capture la trame initiale.

6. Système selon la revendication 5, **caractérisé en ce que** le système comprend en outre :
une troisième unité d'acquisition (407) configurée pour acquérir une pose actuelle du véhicule mesurée par le module de positionnement du véhicule à un instant actuel après que l'unité de repositionnement a déterminé la pose de relocalisation du véhicule dans la carte de SLAM globale en fonction de la pose de relocalisation du module de caméra cible dans la carte de SLAM globale ; et
une unité de positionnement (408) configurée pour déterminer une pose de localisation, correspondant à la pose actuelle, dans la carte de SLAM globale en tant que résultat de localisation du véhicule à l'instant actuel en fonction de la pose actuelle et de la pose de relocalisation du véhicule dans la carte de SLAM globale.

7. Véhicule, comprenant le système de SLAM pour un véhicule selon l'une quelconque des revendications 4 à 6.
